# EUROPEAN PATENT SPECIFICATION

(11) **EP 4 341 447 B1**
(45) Date of publication and mention of the grant of the patent: **17.09.2025**
(21) Application number: 21727939.7
(22) Date of filing: 18.05.2021
(51) Int. Cl.: C21B 13/00, C21B 13/02

(54) **METHOD FOR MANUFACTURING DIRECT REDUCED IRON AND DRI MANUFACTURING EQUIPMENT**
VERFAHREN ZUR HERSTELLUNG VON DIREKT REDUZIERTEM EISEN UND DRI-HERSTELLUNGSAUSRÜSTUNG
PROCÉDÉ DE FABRICATION D'ÉQUIPEMENT DE FABRICATION DE DRI ET DE FER À RÉDUCTION DIRECTE

(43) Date of publication of application: 27.03.2024
(73) Proprietor: ArcelorMittal, 1160 Luxembourg (LU)
(72) Inventor: TSVIK, George, Valparaiso, IN 46385 (US); BOULANOV, Dmitri, East Chicago, IN 46312 (US); REYES RODRIGUEZ, Jon, 33400 Aviles Asturias (ES); CARRIER, Odile, 57000 Metz (FR); SALAME, Sarah, 57283 Maizieres les Metz (FR); BARROS LORENZO, José, 57283 Maizieres les Metz (FR); ANDRADE, Marcelo, East Chicago, IN 46312 (US); LU, Dennis, East Chicago, IN 46312-2939 (US)
(74) Representative: Lavoix
(86) International application number: PCT/IB2021/054252
(87) International publication number: WO 2022/243724

(56) References cited:
- WO-A1-2020/245070
- US-A- 4 333 761
- US-A1- 2016 002 744
- US-B2- 9 970 071
- LULE R. ET AL: "The production of steels applying 100% DRI for nitrogen removal", AISTECH 2009, 31 December 2009 (2009-12-31), pages 3 - 8, XP093231561, Retrieved from the Internet <URL:https://www.midrex.com/wp-content/uploads/Production_of_Steels_Applying.pdf> [retrieved on 20241205]

## Description

The invention is related to a method for manufacturing Direct Reduced Iron (DRI) and to a DRI manufacturing equipment.

Steel can be currently produced through two main manufacturing routes. Nowadays, most commonly used production route consists in producing pig iron in a blast furnace, by use of a reducing agent, mainly coke, to reduce iron oxides. In this method, approx. 450 to 600 kg of coke, is consumed per metric ton of pig iron; this method, both in the production of coke from coal in a coking plant and in the production of the pig iron, releases significant quantities of CO₂.

The second main route involves so-called "direct reduction methods". Among them are methods according to the brands MIDREX, FINMET, ENERGIRON/HYL, COREX, FINEX etc., in which sponge iron is produced in the form of HDRI (Hot Direct Reduced Iron), CDRI (cold direct reduced iron), or HBI (hot briquetted iron) from the direct reduction of iron oxide carriers. Sponge iron in the form of HDRI, CDRI, and HBI usually undergo further processing in electric arc furnaces. Patent documents US 2016/002744 A1, US 4 333 761 A, US 9 970 071 B2, WO 2020/245070 A1 further disclose alternative methods for manufacturing direct reduced iron.

There are three zones in each direct reduction shaft with cold DRI discharge: Reduction zone at top, transition zone at the middle, cooling zone at the cone shape bottom. In hot discharge DRI, this bottom part is used mainly for product homogenization before discharge.

Reduction of the iron oxides occurs in the upper section of the furnace, at temperatures up to 950°C. Iron oxide ores and pellets containing around 30% by weight of Oxygen are charged to the top of a direct reduction shaft and are allowed to descend, by gravity, through a reducing gas. This reducing gas is entering the furnace from the bottom of reduction zone and flows counter-current from the charged oxidised iron. Oxygen contained in ores and pellets is removed in stepwise reduction of iron oxides in counter-current reaction between gases and oxide. Oxidant content of gas is increasing while gas is moving to the top of the furnace.

The reducing gas generally comprises hydrogen and carbon monoxide (syngas) and is obtained by the catalytic reforming of natural gas. For example, in the so-called MIDREX method, first methane is transformed into a reformer according to the following reaction to produce the syngas or reduction gas:

CH4 + CO2 -> 2CO + 2H2

and the iron oxide reacts with the reduction gas, for example according to the following reactions:

3Fe203 + CO/H2 -> 2Fe3O4+CO2/H2O

Fe3O4 + CO/H2 -> 3 FeO + CO2/H2O

FeO + CO/H2 -> Fe + CO2/H20

At the end of the reduction zone the ore is metallized.

A transition section is found below the reduction section; this section is of sufficient length to separate the reduction section from the cooling section, allowing an independent control of both sections. In this section carburization of the metallized product happens. Carburization is the process of increasing the carbon content of the metallized product inside the reduction furnace through following reactions:

3Fe + CH4 → Fe3C + 2H2 (Endothermic)

3Fe + 2CO → Fe3C + CO2 (Exothermic)

3Fe + CO + H2 → Fe3C + H2O (Exothermic)

Injection of natural gas in the transition zone is using sensible heat of the metallized product in the transition zone to promote hydrocarbon cracking and carbon deposition. Due to relatively low concentration of oxidants, transition zone natural gas is more likely to crack to H₂ and Carbon than reforming to H₂ and CO. Natural gas cracking provides carbon for DRI carburization and, at the same time adds reductant (H₂) to the gas that increases the gas reducing potential.

In view of the considerable increase in the concentration of CO₂ in the atmosphere since the beginning of the last century and the subsequent greenhouse effect, it is essential to reduce emissions of CO₂ where it is produced in a large quantity, and therefore in particular during DRI manufacturing.

Based on the above, there is a need for a method of manufacturing Direct Reduced Iron that is CO₂-neutral, environmentally friendly and easy to implement, while showing a good yield.

This problem is solved by a method for manufacturing Direct Reduced Iron wherein iron ore is reduced in a DRI shaft by a reducing gas comprising hydrogen obtained by extraction from coke oven gas through a hydrogen separation unit, the remaining part of such coke oven gas being at least partly injected in the transition section of said DRI shaft to set the carbon amount of said Direct Reduced Iron from 0.5 to 3 wt.%.

The method of the invention may also comprise the following optional characteristics considered separately or according to all possible technical combinations:
- the reduction gas further comprises top gas exiting the DRI shaft, which is mixed with said hydrogen obtained by extraction from coke oven gas,
- the reduction gas further comprises additional reductant gas to be selected among hydrogen and biogas, which is mixed with said hydrogen obtained by extraction from coke oven gas,
- the such reduction gas is being heated after mixing,
- the heating of the reducing gas is being done by using CO2 neutral electricity,
- the reducing gas is being injected in the DRI shaft in its reduction section,
- the top gas coming from said DRI shaft is being scrubbed to remove water before being mixed into said reducing gas,
- the remaining part of such coke oven gas is being partly injected in the cooling section of said DRI shaft,
- the carbon content of the Direct Reduced Iron is set from 1 to 2 wt.%.

In the frame of the present invention, Direct Reduced Iron covers so-called DRI, but also hot briquetted iron (HBI), Cold Direct Reduced iron (CDRI) and Hot Direct Reduced Iron (HDRI). Such material can be later used in different processes, like, for example, processes to produce pig iron in a blast furnace or steel in a BOF or in an electric arc furnace. It can be also used as a combustible or as an electrode in a battery.

The invention is also related to a DRI manufacturing equipment including a DRI shaft and a hydrogen separation unit, wherein said hydrogen separation unit inlet is connected to a coke oven gas supply and includes a first outlet connected to the DRI shaft to inject hydrogen separated from said coke oven gas and a second outlet connected to the transition section of said DRI shaft to inject at least part of the remaining part of such coke oven gas.

The equipment may also comprise the following optional characteristics considered separately or according to all possible technical combinations:
- a mixer comprising a first inlet connected to said first outlet of said hydrogen separation unit and a second inlet connected to the top gas outlet of said DRI shaft is provided,
- the mixer includes a third inlet connected to an additional reductant gas supply,
- the mixer is connected to the reduction section of said DRI shaft,
- a scrubber connected to the top gas outlet of said DRI shaft is provided.

Other characteristics and advantages of the invention will emerge clearly from the description of it that is given below by way of an indication and which is in no way restrictive, with reference to the appended figures in which:

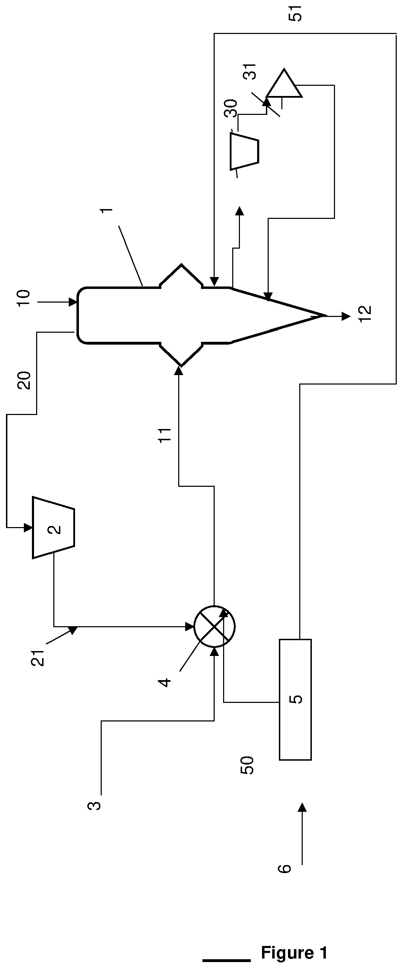

- Figure 1 illustrates a DRI manufacturing equipment according to the invention.

Elements in the figure are illustration and may not have been drawn to scale.

Figure 1 is a schematic view of a DRI manufacturing equipment according to the invention. The DRI manufacturing equipment includes a DRI shaft 1 comprising from top to bottom an inlet for iron ore 10 that travels through the shaft by gravity, a reduction section located in the upper part of the shaft, a transition section located in the midpart of the shaft, a cooling section located at the bottom and an outlet 12 from which the direct reduced iron is finally extracted.

On top of the shaft, the top gas exiting the DRI shaft is collected in a pipe 20 which can optionally be connected to a scrubber 2 located on the top gas outlet of the DRI shaft. The top gas exiting from the DRI shaft usually comprises H₂, CO, CH₄, H₂O, CO₂ and N₂ in various proportions. The top gas scrubbing operation allows removing water vapor from the rest of the stream to improve its reduction potential.

In a preferred embodiment, after scrubbing, the top gas comprises from 40 to 75 vol% of H₂, from 0 to 30 vol% of carbon monoxide CO, from 0 to 10 vol% of methane CH₄, from 0 to 25 vol% of carbon dioxide CO₂, up to 5 vol% of H₂O, the remainder being nitrogen N₂. It is preferred to have, after scrubbing, a ratio of H₂/N₂ from 1.5 to 3 in such top gas.

Once the top gas exits the scrubber 2, it can optionally be compressed and can either be sent back to the DRI shaft or sent to one of the inlets of a mixer 4 through a connecting pipe 21.

Another inlet of said mixer 4 can be connected to a reduction gas supply 3. Such reduction gas can consist in hydrogen or in a hydrocarbon gas, like methane for example. In a preferred embodiment, the hydrogen supply is fed with green hydrogen produced without CO₂ emission, for example by water or steam electrolysis that can be powered with CO₂ neutral electricity.

CO₂ neutral electricity includes notably electricity from renewable source but can encompass the use of electricity coming from nuclear sources as it is not emitting CO₂ to be produced. CO₂ from renewable source is defined as energy that is collected from renewable resources, which are naturally replenished on a human timescale, including sources like sunlight, wind, rain, tides, waves, and geothermal heat.

In another embodiment, the reductant gas supply consists in a biogas, which is a renewable energy source that can be obtained by the breakdown of organic matter in the absence of oxygen inside a closed system called bioreactor. Biogas can be produced from raw materials such as agricultural waste, manure, municipal waste, plant material, sewage, green waste, food waste or any biodegradable materials. A preferred bio gas is for example biomethane.

A third inlet of the mixer 4 is connected to the outlet of a separation unit 5. Such separation unit 5 is connected to a Coke Oven gas supply 6. Coke oven gas composition is usually comprising 3 to 6 vol% of CO, 1 to 5 vol% of CO₂, 36 to 62 vol% of H₂, 16 to 27 vol% of CH₄, the remainder being nitrogen. Coke oven is produced as a by-product of the coke production and is usually used to fire the coke oven battery or simply burned. In most cases, its further use results in CO₂ emissions in the atmosphere.

The separation unit 5 allows extracting hydrogen from such stream and sending such hydrogen to the mixer 4 through a connecting pipe 50.

The separation unit can be based on any suitable industrial process of separation of gases, like physical and chemical absorption processes, adsorption processes or membrane processes.

In a preferred embodiment, the separation unit is a Pressure Swing Adsorption (PSA).

In another embodiment, the separation unit is a membrane, preferably a ceramic microporous membrane.

The reduction gas produced in the mixer 4 through the addition of the top gas, additional reductant gas and hydrogen from Coke Oven Gas, can optionally be heated through heating means provided to the mixer, such heating means being for example preferably powered by CO₂ neutral electricity or by burning a part of the coke oven gas. In a preferred embodiment, the temperature of the reduction gas is set to a range from 700°C to 1000°C, preferably from 800 to 1000°C.

This reduction gas is then sent back to the DRI shaft, preferably in its reduction section through a pipe 11.

Coming back to the separation unit 5, the remaining part of the gas obtained after extraction of the hydrogen, is being sent back to the transition section of the DRI shaft 1 through a connecting pipe 51.

The injection of this gas is made to increase the carbon content of the Direct Reduced Iron to a range from 0.5 to 3 wt.%, preferably from 1 to 2 wt.% which allows getting a Direct Reduced Iron that can be easily handled and that keeps a good combustion potential for its future use.

The DRI manufacturing equipment may further comprise a recycling loop in the cooling section that allows extracting part of the gas present at that level to send it in a scrubber 30 and in a compression unit 31 before reinjecting it in the shaft 1.

In a preferred embodiment, part of the gas transported in the connection pipe 51 can be injected in such recycling loop of the cooling section after the compression unit to allow increasing the carbon content of the Direct Reduced Iron in the cooling section as well.

It is also possible to inject part of the gas transported in the connection pipe 51 in the reduction section of the DRI shaft, as such gas has a reduction power thanks to its content in CO and remaining H₂.

By using the method according to the invention, Direct Reduced Iron can be manufactured with the appropriate quality and yield, while remaining CO₂ neutral and taking optimal advantage of the gas co-product from coke manufacturing. It also allows decreasing the use of fossil energy like natural gas.

## Claims

1. A method for manufacturing Direct Reduced Iron wherein iron ore is reduced in a DRI shaft by a reducing gas comprising hydrogen obtained by extraction from coke oven gas through a hydrogen separation unit, the remaining part of such coke oven gas being at least partly injected in the transition section of said DRI shaft to set the carbon amount of said Direct Reduced Iron in a range from 0.5 to 3 wt.%.

2. A method according to claim 1 wherein said reduction gas further comprises top gas exiting the DRI shaft, which is mixed with said hydrogen obtained by extraction from coke oven gas.

3. A method according to claim 1 or 2, wherein said reduction gas further comprises additional reductant gas to be selected among hydrogen and biogas, which is mixed with said hydrogen obtained by extraction from coke oven gas.

4. A method according to claim 2 or 3 wherein such reduction gas is being heated after mixing.

5. A method according to claim 4 wherein said heating of the reducing gas is being done by using electricity from nuclear sources or renewable sources chosen among sunlight, wind, rain, tides, waves, and geothermal heat.

6. A method according to anyone of the previous claims wherein said reducing gas is being injected in the DRI shaft in its reduction section.

7. A method according to anyone of the previous claims wherein the top gas coming from said DRI shaft is being scrubbed to remove water before being mixed into said reducing gas.

8. A method according to anyone of the previous claims wherein the remaining part of such coke oven gas is being partly injected in the cooling section of said DRI shaft.

9. A method according to anyone of the previous claims wherein the carbon content of the Direct Reduced Iron is set from 1 to 2 wt.%.

10. A DRI manufacturing equipment including a DRI shaft (1) and a hydrogen separation unit (5), wherein said hydrogen separation unit (5) inlet is connected to a coke oven gas supply (6) and includes a first outlet connected to the DRI shaft to inject hydrogen separated from said coke oven gas and a second outlet connected to the transition section of said DRI shaft (1) to inject at least part of the remaining part of such coke oven gas.

11. A DRI equipment according to claim 10, further including a mixer (4) comprising a first inlet connected to said first outlet of said hydrogen separation unit (5) and a second inlet connected to the top gas outlet of said DRI shaft (1).

12. A DRI equipment according to claim 11, wherein such mixer (4) includes a third inlet connected to an additional reductant gas supply.

13. A DRI equipment according to claims 11 or 12, wherein said mixer (4) is connected to the reduction section of said DRI shaft (1).

14. A DRI equipment according to anyone of the previous claims, further comprising a scrubber (2) connected to the top gas outlet of said DRI shaft (1).

## Patentansprüche

1. Verfahren zum Herstellen von direkt reduziertem Eisen, wobei Eisenerz in einem DRI-Schacht durch ein Reduktionsgas reduziert wird, das Wasserstoff umfasst, der durch Extraktion aus Koksofengas durch eine Wasserstoffabtrennungseinheit erlangt wird, wobei der verbleibende Teil eines solchen Koksofengases zumindest teilweise in den Übergangsabschnitt des DRI-Schachts injiziert wird, um die Kohlenstoffmenge des direkt reduzierten Eisens in einem Bereich von 0,5 bis 3 Gewichts-% einzustellen.

2. Verfahren nach Anspruch 1, wobei das Reduktionsgas ferner aus dem DRI-Schacht austretendes Abgas umfasst, das mit dem Wasserstoff gemischt wird, der durch Extraktion aus Koksofengas erlangt wird.

3. Verfahren nach Anspruch 1 oder 2, wobei das Reduktionsgas ferner zusätzliches Reduktionsgas umfasst, das aus Wasserstoff und Biogas auszuwählen ist, das mit dem Wasserstoff gemischt wird, der durch Extraktion aus Koksofengas erlangt wird.

4. Verfahren nach Anspruch 2 oder 3, wobei das Reduktionsgas nach Mischen erhitzt wird.

5. Verfahren nach Anspruch 4, wobei das Erhitzen des Reduktionsgases durch Verwenden von Elektrizität aus nuklearen Quellen oder erneuerbaren Quellen, die ausgewählt sind aus Sonnenlicht, Wind, Regen, Gezeiten, Wellen und geothermischer Wärme, erfolgt.

6. Verfahren nach einem der vorherigen Ansprüche, wobei das Reduktionsgas in den DRI-Schacht in seinem Reduktionsabschnitt injiziert wird.

7. Verfahren nach einem der vorherigen Ansprüche, wobei das aus dem DRI-Schacht kommende Abgas gewaschen wird, um Wasser zu entfernen, bevor es mit dem Reduktionsgas gemischt wird.

8. Verfahren nach einem der vorherigen Ansprüche, wobei der verbleibende Teil des Koksofengases teilweise in den Kühlabschnitt des DRI-Schachts injiziert wird.

9. Verfahren nach einem der vorherigen Ansprüche, wobei der Kohlenstoffgehalt des direkt reduzierten Eisens auf 1 bis 2 Gewichts-% eingestellt wird.

10. DRI-Herstellungsanlage, die einen DRI-Schacht (1) und eine Wasserstoffabtrennungseinheit (5) beinhaltet, wobei der Einlass der Wasserstoffabtrennungseinheit (5) mit einer Koksofengaszufuhr (6) verbunden ist und einen ersten Auslass, der mit dem DRI-Schacht verbunden ist, um aus dem Koksofengas abgetrennten Wasserstoff zu injizieren, und einen zweiten Auslass, der mit dem Übergangsabschnitt des DRI-Schachts (1) verbunden ist, um zumindest einen Teil des verbleibenden Teils des Koksofengases zu injizieren, beinhaltet.

11. DRI-Anlage nach Anspruch 10, die ferner einen Mischer (4) beinhaltet, umfassend einen ersten Einlass, der mit dem ersten Auslass der Wasserstoffabtrennungseinheit (5) verbunden ist, und einen zweiten Einlass, der mit dem Abgasauslass des DRI-Schachts (1) verbunden ist.

12. DRI-Anlage nach Anspruch 11, wobei der Mischer (4) einen dritten Einlass beinhaltet, der mit einer zusätzlichen Reduktionsgaszufuhr verbunden ist.

13. DRI-Anlage nach Anspruch 11 oder 12, wobei der Mischer (4) mit dem Reduktionsabschnitt des DRI-Schachts (1) verbunden ist.

14. DRI-Anlage nach einem der vorherigen Ansprüche, ferner umfassend einen Wäscher (2), der mit dem Abgasauslass des DRI-Schachts (1) verbunden ist.

## Revendications

1. Procédé de fabrication de fer de réduction directe dans lequel du minerai de fer est réduit dans une cuve de DRI par un gaz réducteur comprenant de l'hydrogène obtenu par extraction à partir d'un gaz de cokerie par l'intermédiaire d'une unité de séparation d'hydrogène, la partie restante d'un tel gaz de cokerie étant au moins partiellement injectée dans la section de transition de ladite cuve de DRI pour définir la quantité de carbone dudit fer de réduction directe dans une plage de 0,5 à 3 % en poids.

2. Procédé selon la revendication 1 dans lequel ledit gaz réducteur comprend en outre un gaz de gueulard sortant de la cuve de DRI, lequel est mélangé avec ledit hydrogène obtenu par extraction à partir de gaz de cokerie.

3. Procédé selon la revendication 1 ou 2, dans lequel ledit gaz réducteur comprend en outre un gaz réducteur supplémentaire devant être sélectionné parmi hydrogène et biogaz, lequel est mélangé avec ledit hydrogène obtenu par extraction à partir de gaz de cokerie.

4. Procédé selon la revendication 2 ou 3 dans lequel un tel gaz réducteur est chauffé après mélange.

5. Procédé selon la revendication 4 dans lequel ledit chauffage du gaz réducteur est réalisé en utilisant de l'électricité issue de sources nucléaires ou de sources renouvelables choisies parmi lumière solaire, vent, pluie, marées, vagues et chaleur géothermique.

6. Procédé selon l'une quelconque des revendications précédentes dans lequel ledit gaz réducteur est injecté dans la cuve de DRI dans sa section de réduction.

7. Procédé selon l'une quelconque des revendications précédentes dans lequel le gaz de gueulard provenant de ladite cuve de DRI est épuré pour éliminer l'eau avant d'être mélangé dans ledit gaz réducteur.

8. Procédé selon l'une quelconque des revendications précédentes dans lequel la partie restante d'un tel gaz de cokerie est partiellement injectée dans la section de refroidissement de ladite cuve de DRI.

9. Procédé selon l'une quelconque des revendications précédentes dans lequel la teneur en carbone du fer de réduction directe est réglée de 1 à 2 % en poids.

10. Équipement de fabrication de DRI incluant une cuve de DRI (1) et une unité de séparation d'hydrogène (5), dans lequel ladite entrée d'unité de séparation d'hydrogène (5) est reliée à une alimentation en gaz de cokerie (6) et inclut une première sortie reliée à la cuve de DRI pour injecter l'hydrogène séparé dudit gaz de cokerie et une deuxième sortie reliée à la section de transition de ladite cuve de DRI (1) pour injecter au moins une partie de la partie restante d'un tel gaz de cokerie.

11. Équipement de DRI selon la revendication 10, incluant en outre un mélangeur (4) comprenant une première entrée reliée à ladite première sortie de ladite unité de séparation d'hydrogène (5) et une deuxième entrée reliée à la sortie de gaz de gueulard de ladite cuve de DRI (1).

12. Équipement de DRI selon la revendication 11, dans lequel un tel mélangeur (4) inclut une troisième entrée reliée à une alimentation en gaz réducteur supplémentaire.

13. Équipement de DRI selon les revendications 11 ou 12, dans lequel ledit mélangeur (4) est relié à la section de réduction de ladite cuve de DRI (1).

14. Équipement de DRI selon l'une quelconque des revendications précédentes, comprenant en outre un épurateur (2) relié à la sortie de gaz de gueulard de ladite cuve de DRI (1).
